# EUROPEAN PATENT SPECIFICATION

(11) **EP 2 499 947 B1**
(45) Date of publication and mention of the grant of the patent: **05.11.2014**
(21) Application number: 11425064.0
(22) Date of filing: 14.03.2011
(51) Int. Cl.: A47J 31/54, A47J 31/60

(54) **Anti-lime scale system with alternate rectilinear hydraulic movement and pre-infusion adjuster for espresso machines**
Antikalk-Messsystem mit wechselnder geradliniger hydraulischen Bewegung und Voraufguss-Einstellvorrichtung für Espressomaschinen
Système de détartrage doté d'un mouvement hydraulique rectiligne alternatif et d'un régleur pré-infusion pour machines à expresso

(43) Date of publication of application: 19.09.2012
(73) Proprietor: Spinel S.R.L., 73052 Parabita (Lecce) (IT)
(72) Inventor: Spinelli, Giovanni, 73052 - Parabita (LE) (IT)
(74) Representative: Bruni, Giovanni

(56) References cited:
- WO-A2-2009/010997
- DE-U1-202007 005 738

## Description

Object of the present invention is an improvement of the anti-lime scale system yet applied to espresso machines patented by Spinel Srl.

In the state of the art, it is known that the most frequent causes of failure and malfunctioning in the espresso machines are principally due to lime scale build up in the essential components as for example heat exchangers and boilers for the production of hot water. To obviate these drawbacks, there have been proposed different solutions to avoid the build up of such deposits: some solutions act modifying the chemical composition of the water thus worsening the quality of the espresso, other ones act on the surfaces thus making them little apt to the adherence of the produced precipitates, but these treatments result very expensive as well.

Among the proposed systems for the reduction of lime scale deposits, the ones which avoid the natural lime scale deposit in the water passages by means of the principle of the alternate rotating movement of the accelerator inside the heat exchanger, are noteworthy. In this view, it is configured the Italian patent of the writing company No. BA2007A000054 filed on 13 July 2007, which refers to coffee machines provided with heat exchanger with self-cleaning system as well as with a control system for the mechanical locking of the pod-holders with compression movement. In the coffee machines according to the cited patent, the self-cleaning and anti-lime scale effect are obtained by using a screw accelerator inside the heat exchanger, the screw accelerator being in any case actuated by outer mechanical means such for example levers or transmission systems connected to outer mechanical organs (group closing levers or geared motors).

The technical limit of such systems is that they cannot be applied in espresso machines wherein mechanical movements are not provided, or when, for various reasons, it is difficult or impossible to transfer their movement to the coffee accelerator. Another disadvantage of the solutions according to the above-cited patent is that the object system does not allow a sufficient pre-infusion while dispensing the espresso.

Aim of the present invention it to improve the espresso machines solving the above-described drawbacks. Therefore, it is provided an anti-lime scale system for heat exchangers with a movement of the accelerator, which, while maintaining all the qualities and the new aspects of the previous system, yet patented by the writer, does not need any outer mechanical organ for its movement. The alternate rectilinear movement of the accelerator is obtained exploiting the hydraulic force, which, besides descaling the walls of the exchanger, increases the pre-infusion considerably while dispensing the espresso.

These aims and the consequent advantages, as well as the characteristics of the present invention, will result clearer from the following detailed description of one preferred embodiment, shown as a way of not limiting example, referring to the drawings in which:
- Fig. 1 shows the anti-lime scale system provided with alternate rectilinear hydraulic movement;
- Fig. 2 shows the new anti-lime scale system applied to a machine for manually ground loose coffee;
- Fig. 3 shows the new anti-lime scale system applied to a pod coffee machine;
- Fig. 4 shows the new anti-lime scale system applied to a capsule coffee machine;
- Figs. 5a and 5b show the initial step of the functioning cycle of the anti-lime scale system, in the pod coffee machine and the capsule coffee machine, respectively;
- Figs. 6a and 6b show the cycle step relating to the pre-infusion step of the coffee, in the pod coffee machine and the capsule coffee machine, respectively,
- Figs. 7a and 7b show the cycle step relating to the dispensing of espresso in the pod coffee machine and the capsule coffee machine, respectively;
- Figs. 8a and 8b show the cycle step relating to the residual water discharge in the pod coffee machine and the capsule coffee machine, respectively.

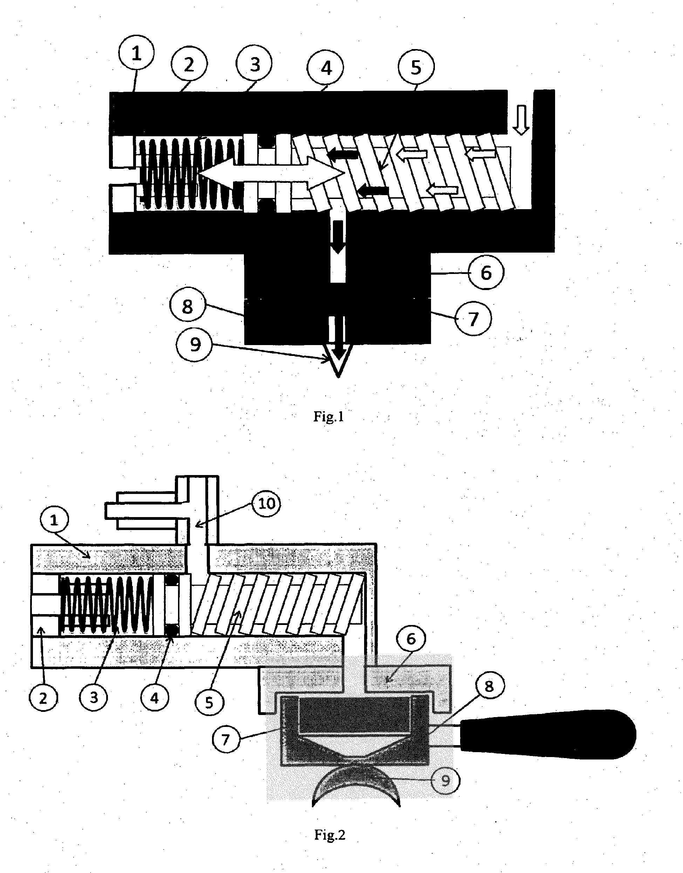

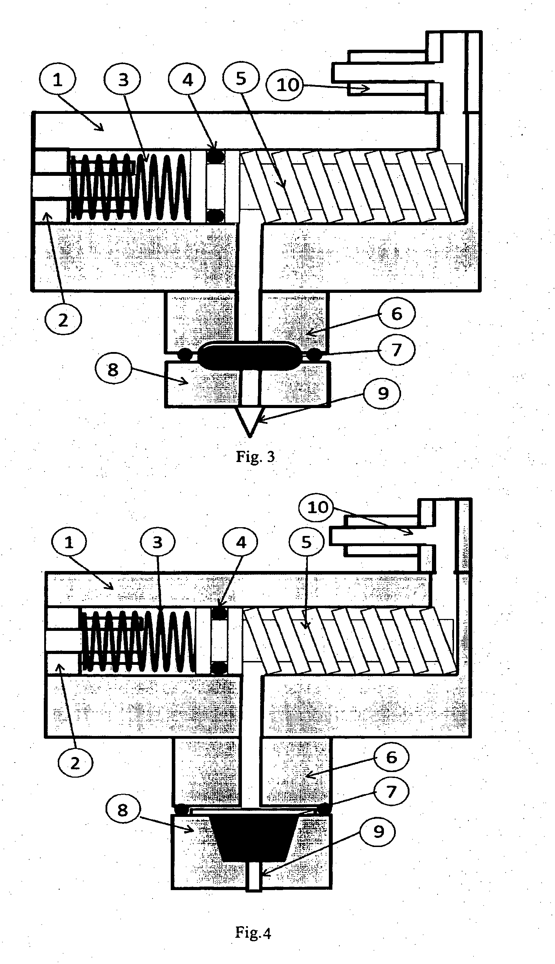

Referring to figs. 1 to 4, the new anti-lime scale system with alternate rectilinear hydraulic movement and pre-infusion adjuster is made up of a heat exchanger 1 in brass or aluminum, a pre-loading adjuster 2, a stainless steel spring 3, at least an O-ring seal 4, an accelerator 5 in brass which can move in alternate rectilinear movement in the directions indicated by the arrows, an upper group 6 for pods, capsules or loose ground coffee, a coffee dose 7 in the form of pod, capsule or loose ground coffee, a lower group 8 for pods, capsules or loose ground coffee, a spout 9 for dispensing coffee, a three way solenoid valve 10.

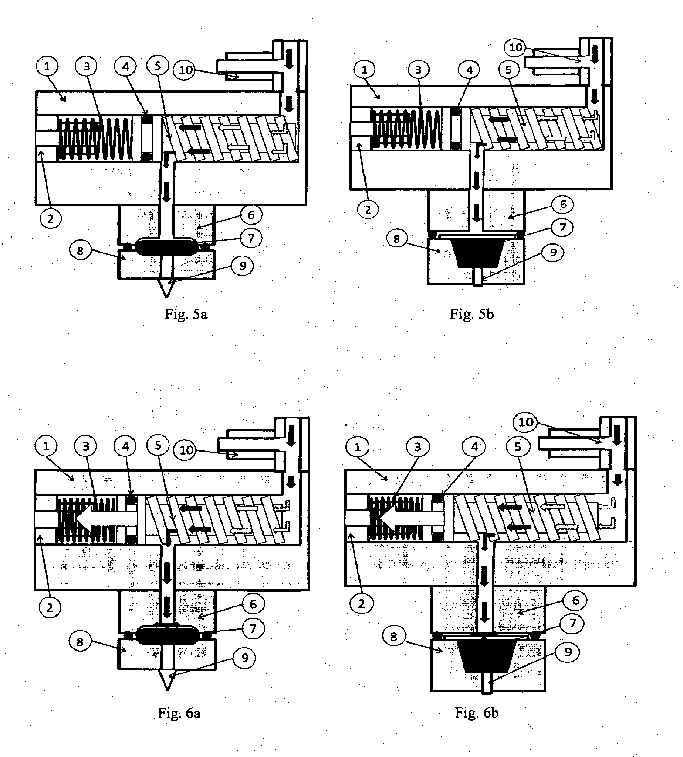

As it is shown in figs. 5a and 5b, the functioning cycle of the anti-lime scale system with alternate rectilinear hydraulic movement and pre-infusion adjuster 2 begins when the electro-pump of the coffee machine is started and, consequently, the cold water pumping begins inside the exchanger 1. In this step, the position of the accelerator 5 is maintained "forward" thanks to the pre-loading of the stainless steel spring 3, while the hydraulic sealing with the exchanger is guaranteed by at least an O-ring seal 4 which allows the alternate rectilinear movement (forwards and backwards) of the accelerator 5. In the following, the water, which rotates among the turns of the accelerator 5, heats gradually until reaching the ground coffee single-dose 7 at a temperature little lower than the melting point and in a physical state in which the liquid and gaseous phases are both present (figs. 6a and 6b).

In this process step, the ground single-dose 7 resists to the water passage, thus generating a gradual increase in pressure (pre-infusion step). In the known systems without pre-infusion, the pressure increase rapidly from very low values up to approximately 15 bar, thus damaging the ground coffee dose. Besides, undesired phenomena occur, such for example the water filtering through the fissures and cracks in the coffee dose caused by the rapid increase in pressure, thus compromising both the correct infusion of the espresso and the quality of the espresso coffee final product.

In the anti-lime scale system object of the present invention instead, the pressure begins to increase when the water, mixed with vapour, comes in contact with the coffee single-dose 7 and, contrary to the known systems, the pressure peak stabilizes for a short period of time approximately around 5 bar. This constant level of intermediate pressure is reached because the accelerator 5, pushed by the water pressure, begins to move backwards in rectilinear way (in the direction of the arrow in figs. 6a and 6b) thus increasing the chamber volume in the heat exchanger and compressing the pre-loading spring 3. In the just described step, said "pre-infusion step", the water lies on the upper surface of the ground coffee single-dose 7 soaking its vegetal fibers (cellulose, lignin), which, increasing in volume, compact and thicken the coffee dose 7 inside the coffee group 8.

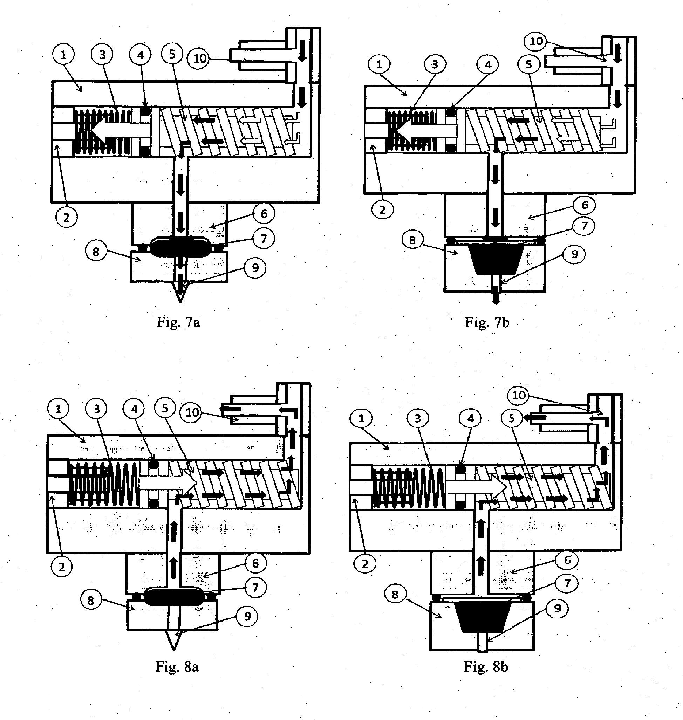

As it is shown in figs. 7a and 7b, when the accelerator 5, subjected to the hydraulic pressure force, reaches the end of its stroke touching the pre-infusion (or pre-loading) adjuster 2, the pressure begins to increase again reaching its maximum peak near the value of about 15 bar. Only in this moment, the water begins to percolate through the coffee dose 7, which is compacted from the previous pre-infusion step, with the final result of a correct extraction of all the substances making up the espresso coffee drink. Therefore, the stroke of the accelerator is easily adjustable by suitably acting on the pre-infusion adjuster 2, which makes up the "stroke end" of the same accelerator 5. When the espresso coffee dispensing is stopped, the hydraulic push which maintained the back position of the accelerator 5 is nullified and the spring 3 brings it back in the resting position (movement of the accelerator in the direction of the arrow) for the step of discharging high pressure water through the three way solenoid valve 10 (figs. 8a and 8b).

In the discharging step, there are discharged outwards also small quantities of emulsified oil substances, which are contained in the espresso coffee, which brought by the process water, contribute to lubricate the sliding system of the accelerator 5 inside the exchanger 1.

Therefore, the "anti-lime scale" effect of the system with alternate rectilinear hydraulic movement and pre-infusion adjuster is obtained by the continuous rectilinear and alternate movement of the accelerator 5 and by the lubricating effect of the above-described emulsified residues. The hydraulic pressure, in fact, acting on the walls of the accelerator 5, pushes it backwards, in opposite direction to the direction of the elastic force of the spring 3, which, on the contrary, tends to maintain it in resting position (figs. 6a, 6b, 7a, 7b).

Moreover, as just above-described, the continuous alternate rectilinear movement, constantly lubricated by the espresso coffee residues which are dragged inside the system by the discharging water, prevent the lime scale from depositing, thus increasing the perfect working efficiency in time of the coffee machine.

It is sufficiently clear from the description that the anti-lime scale system with alternate rectilinear hydraulic movement and pre-infusion adjuster object of the present invention can be applied to different kinds of espresso machines (for example pods, capsules, manually ground loose coffee machines) as it is shown in figs. 2 to 4. The thus described system can be implemented in any of the different kinds of machines, the kind of coffee used in the espresso machined being the only one thing to be changed (pod, capsule, ground coffee).

## Claims

1. Anti-lime scale system with alternate rectilinear hydraulic movement and pre-infusion adjuster, applicable to coffee machines, the system comprising a heat exchanger (1), a screw accelerator (5) inside said exchanger (1), **characterized in that** the actuation of the accelerator (5) is provided by means of the sole hydraulic force.

2. Anti-lime scale system applicable to coffee machines according to claim 1, **characterized in that** the alternate rectilinear movement of the accelerator (5) is adjusted by a pre-loading adjuster (2) and an elastic means (3).

3. Anti-lime scale system applicable to coffee machines according to claim 1 or 2, **characterized in that** the sealing between accelerator (5) and exchanger (1) is guaranteed by at least an O-ring (4).

4. Anti-lime scale system applicable to coffee machines according to any one of the preceding claims, **characterized in that** in the initial step of water pumping inside the exchanger (1), the position of the accelerator (5) is maintained "forward" for the pre-loading of the elastic means (3).

5. Anti-lime scale system applicable to coffee machines according to any one of the preceding claims, **characterized in that** in the pre-infusion step the accelerator (5) is subjected to the hydraulic pressure and compresses the elastic means (3) until it reaches the end of its stroke touching the pre-loading adjuster (2).

6. Anti-lime scale system applicable to coffee machines according to any one of the preceding claims, **characterized in that** following the coffee dispensing step, the accelerator (5) is brought back in the resting position by the elastic means (3) because the hydraulic push is nullified.

7. Anti-lime scale system applicable to coffee machines according to any one of the preceding claims, **characterized in that** in the discharging step the high pressure water goes out from the three ways solenoid valve (10) together with the emulsified oil substances, contained in the coffee.

8. Anti-lime scale system according to any one of the preceding claims, **characterized in that** it is applicable to pod espresso machines.

9. Anti-lime scale system according to any one of the preceding claims, **characterized in that** it is applicable to capsule espresso machines.

10. Anti-lime scale system according to any one of the preceding claims, **characterized in that** it is applicable to manually ground loose coffee espresso machines.

## Patentansprüche

1. Kalkschutzsystem für Kaffeemaschinen mit geradliniger hydraulischer Wechselbewegung und Vorbrüheinstellung, bestehend aus einem Wärmetauscher (1), einem Beschleuniger (5) innerhalb des erwähnten Tauschers (1), **dadurch gekennzeichnet, dass** der Antrieb des Beschleunigers (5) durch die reine hydraulische Kraft erfolgt.

2. Kalkschutzsystem für Kaffeemaschinen gemäß Anforderung 1, **dadurch gekennzeichnet, dass** die geradlinige Wechselbewegung des Beschleunigers (5) durch einen Vorspannmechanismus (2) und ein elastisches Federelement (3) eingestellt wird.

3. Kalkschutzsystem für Kaffeemaschinen gemäß Anforderung 1 oder 2, **dadurch gekennzeichnet, dass** die Abdichtung zwischen dem Beschleuniger (5) und Tauscher (1) durch mindestens einen O-Ring (4) gewährleistet wird.

4. Kalkschutzsystem für Kaffeemaschinen gemäß einer der vorangehenden Anforderungen, **dadurch gekennzeichnet, dass** der Beschleuniger (5) beim anfänglichen Schritt des Wasserpumpens innerhalb des Tauschers (1) zwecks Vorspannung des elastischen Federelements (3) eine Vorwärtsrichtung beibehält.

5. Kalkschutzsystem für Kaffeemaschinen gemäß einer der vorangehenden Anforderungen, **dadurch gekennzeichnet, dass** der Beschleuniger (5) beim Vorbrühschritt dem hydraulischen Druck ausgesetzt wird und das elastische Federelement (3) zusammendrückt, bis es den Endanschlag erreicht und die Vorspannvorrichtung (2) berührt.

6. Kalkschutzsystem für Kaffeemaschinen gemäß einer der vorangehenden Anforderungen, **dadurch gekennzeichnet, dass** der Beschleuniger (5) nach der Kaffeeausgabe durch das elastische Federelement (3) mittels Aufhebung des hydraulischen Schubs zurück in die Ruheposition gebracht wird.

7. Kalkschutzsystem für Kaffeemaschinen gemäß einer der vorangehenden Anforderungen, **dadurch gekennzeichnet, dass** das Hochdruckwasser beim Ausfluss zusammen mit den im Kaffee enthaltenen emulgierten Ölen durch das Drei-Wege-Magnetventil (10) gelangt.

8. Kalkschutzsystem gemäß einer der vorangehenden Anforderungen, **dadurch gekennzeichnet, dass** es in Pad-Espressomaschinen verwendet werden kann.

9. Kalkschutzsystem gemäß einer der vorangehenden Anforderungen, **dadurch gekennzeichnet, dass** es in Kapsel-Espressomaschinen verwendet werden kann.

10. Kalkschutzsystem gemäß einer der vorangehenden Anforderungen, **dadurch gekennzeichnet, dass** es In Espressomaschinen für manuell gemahlenes loses Kaffeemehl verwendet werden kann.

## Revendications

1. Système anti-calcaire avec mouvement hydraulique alternatif rectiligne et régulateur de pré-infusion, applicables à des machines à café, le système comprenant un échangeur de chaleur (1), un accélérateur à vis (5) à l'intérieur dudit échangeur (1), **caractérisé en ce que** l'actionnement de l'accélérateur (5) est assuré au moyen de la seule force hydraulique.

2. Système anti-calcaire applicable à des machines à café selon la revendication 1, **caractérisé en ce que** le mouvement alternatif rectiligne de l'accélérateur (5) est régulé par un régulateur de précharge (2) et un dispositif élastique (3).

3. Système anti-calcaire applicable à des machines à café selon la revendication 1 ou 2, **caractérisé en ce que** l'étanchéité entre l'accélérateur (5) et l'échangeur (1) est garantie par au moins un joint torique (4).

4. Système anti-calcaire applicable à des machines à café selon l'une quelconque des revendications précédentes, **caractérisé en ce que** lors de l'étape initiale de pompage de l'eau à l'intérieur de l'échangeur (1), la position de l'accélérateur (5) est maintenue "en avant" pour la précharge du dispositif élastique (3).

5. Système anti-calcaire applicable à des machines à café selon l'une quelconque des revendications précédentes, **caractérisé en ce que** lors de l'étape de pré-infusion, l'accélérateur (5) est soumis la pression hydraulique et comprime le dispositif élastique (3) jusqu'à ce qu'il atteigne la fin de sa course, touchant le régulateur de précharge (2).

6. Système anti-calcaire applicable à des machines à café selon l'une quelconque des revendications précédentes, **caractérisé en ce qu'**après l'étape de distribution du café, l'accélérateur (5) est ramené à sa position de repos par le dispositif élastique (3) en raison de ce que la poussée hydraulique est annulée.

7. Système anti-calcaire applicable à des machines à café selon l'une quelconque des revendications précédentes, **caractérisé en ce que** lors de l'étape de refoulement, l'eau sous haute pression s'échappe de l'électrovanne trois voies (10) en même temps que les substances huileuses émulsifiées contenues dans le café.

8. Système anti-calcaire selon l'une quelconque des revendications précédentes, **caractérisé en ce qu'**il est applicable à des machines à expresso à dosettes.

9. Système anti-calcaire selon l'une quelconque des revendications précédentes, **caractérisé en ce qu'**il est applicable à des machines à expresso à capsules.

10. Système anti-calcaire selon l'une quelconque des revendications précédentes, **caractérisé en ce qu'**il est applicable à des machines à expresso à café en vrac moulu manuellement.
